# EUROPÄISCHE PATENTSCHRIFT

(11) **EP 1 348 582 B1**
(45) Veröffentlichungstag und Bekanntmachung des Hinweises auf die Patenterteilung: **29.06.2005**
(21) Anmeldenummer: 03006930.6
(22) Anmeldetag: 26.03.2003
(51) Int. Cl.: B60H 1/00

(54) **Heizungs- oder Klimaanlage für ein Kraftfahrzeug**
Heating or air conditioning installation for a motor vehicle
Installation de chauffage ou de climatisation pour véhicule à moteur

(30) Priorität: 28.03.2002 DE 10214282
(43) Veröffentlichungstag der Anmeldung: 01.10.2003
(73) Patentinhaber: Behr GmbH & Co. KG, 70469 Stuttgart (DE)
(72) Erfinder: Ghussein, Luay, Dipl.-Ing., 70374 Stuttgart (DE); Klingler, Dietrich, Dipl.-Ing., 73540 Heubach (DE); Kreuzer, Walter, 71229 Leonberg (DE); Otto, Jürgen, Dipl.-Ing.(FH), 75428 Illingen (DE); Pubrl, Harald, Dipl.-Ing.(FH), 70437 Stuttgart (DE); Schmadl, Dieter, Dipl.-Ing., 71672 Marbach (DE); Schwahn, Werner, 71701 Schwieberdingen (DE)
(74) Vertreter: Grauel, Andreas, Dr.

(56) Entgegenhaltungen:
- EP-A- 0 989 004
- US-A- 5 160 115
- US-A- 6 074 294
- US-B1- 6 296 562
- PATENT ABSTRACTS OF JAPAN vol. 1995, no. 04, 31. Mai 1995 (1995-05-31) & JP 07 001945 A (NIPPONDENSO CO LTD), 6. Januar 1995 (1995-01-06)

## Beschreibung

Die Erfindung betrifft eine Heizungs- oder Klimaanlage für ein Kraftfahrzeug gemäß dem Oberbegriff des Anspruchs 1.

Zur optimalen Temperierung eines Kraftfahrzeuges ist eine Klimaanlage mit Stellorganen erforderlich, die eine präzise Verteilung und Dosierung der Luft an den einzelnen Auslässen gewährleisten. Üblicherweise werden hierfür Klappen oder ähnliche Elemente mit einem entsprechenden Antrieb, d.h. Motor oder Bowdenzug, zur Steuerung des Luftstromes eingesetzt.

Aus der EP 0 989 004 A2 ist eine Klimaanlage für ein Kraftfahrzeug bekannt, die Temperatur-Ventilbänder zur Steuerung des Luftstromes verwendet. Hierbei ist im Luftführungsgehäuse der Klimaanlage ein Trägerrahmen vorgesehen, welcher ein oder mehrere parallel zueinander angeordnete Ventilbänder trägt. Die Ventilbänder werden durch Bänder gebildet, die in bestimmten Bereichen Öffnungen aufweisen. Hierbei werden die Ventilbänder vom Trägerrahmen so positioniert, dass sie diese Öffnungen - je nach Stellung der Ventilbänder - verschließen oder freigeben. Dabei verlaufen die Ventilbänder V- oder L-förmig über Rollen.

Ferner sind flexible, geschlossene Bänder oder Folien bekannt, welche Durchbrüche aufweisen. Hierbei wird in der Regel die Funktion mehrerer Klappen durch ein einziges Band übernommen, jedoch ist eine derartige Lösung mit nur einem Band ausschließlich für eine Bauform verwendbar.

Es ist Aufgabe der Erfindung, die Luftverteilung mittels Ventilbändern zu verbessern, insbesondere zu vereinfachen.

Diese Aufgabe wird gelöst durch eine Heizungs- oder Klimaanlage mit den Merkmalen des Anspruchs 1.

Erfindungsgemäß ist Heizungs- oder Klimaanlage für ein Kraftfahrzeug mit einem Gehäuse, wobei im und/oder an dem Gehäuse mehrere Wellen für Ventilbänder vorgesehen, bei dem auf einer Welle (im folgenden als Zentral-Welle bezeichnet, auch wenn sie nicht notwendigerweise zentral angeordnet sein muss) mehrere Ventilbänder angeordnet sind, die mit unterschiedlichen Wellen (im folgenden als Neben-Wellen bezeichnet) zusammenwirken. Auf diese Weise kann eine nahezu beliebige Anzahl von Auslässen, also von Öffnungen, mittels der Ventilbänder gesteuert werden. Ferner ist die Größe der Öffnungen nicht wesentlich. Die Ventiltechnik beruht auf einem einfachen Prinzip, auch in Hinblick auf die Kinematik, und lässt sich vielfältig einsetzen, bspw. zur Luftmischung oder Luftverteilung. Mit einer derartigen Anordnung lassen sich mehrere Klappen oder Kassetten ersetzen und es ist nur ein einziger Antrieb hierfür erforderlich. Auf einfache Weise ist eine genaue Dosierung der Öffnungsgröße möglich, wobei eine Reduzierung der bislang vorhandenen Druckverluste möglich ist. Neben einem geringen Raumbedarf bietet die erfindungsgemäße Lösung ein hohes Standardisierungspotential neben niedrigen Herstellungskosten. Ferner sind außer der Zentral- und der oder den Neben-Wellen noch Umlenk-Wellen möglich, welche der Positionierung der Ventilbänder dienen.

Vorzugsweise sind die Wellen parallel zueinander angeordnet, insbesondere sternförmig um eine zentrale Welle angeordnet. Besonders zu bevorzugen ist eine symmetrische Anordnung aufgrund der gleichmäßigeren Kräfteverteilung, so dass insbesondere die zentrale Welle kleiner dimensioniert sein kann.

Bevorzugt sind die Wellen an einer Trägervorrichtung gelagert, welche in das Gehäuse eingebaut wird, jedoch kann die Trägervorrichtung auch ganz oder teilweise direkt durch das Gehäuse gebildet werden.

Vorzugsweise wird die zentrale Welle angetrieben. Hierbei ist an den anderen Wellen, d.h. den Neben-Wellen, eine Rückstellvorrichtung, insbesondere in Form einer Feder, bspw. einer Torsions- oder Spiralfeder, oder eines Torsionsstabes, vorgesehen.

Alternativ wird mindestens eine Welle, vorzugsweise sämtliche Wellen, durch einen umlaufenden Antrieb angetrieben. Dies erfolgt insbesondere schlupffrei durch einen umlaufenden form- oder kraftschlüssigen Ketten- oder Riemenantrieb.

Vorzugsweise ist eine Stützvorrichtung für die Ventilbänder vorgesehen. Die Stützvorrichtung wird insbesondere durch ein Stützgitter in den Öffnungen gebildet, welches eine zu starke Verformung der Ventilbänder verhindert.

Hierbei kann die Stützvorrichtung in einem Modul integriert sein, welches auch die Trägervorrichtung samt Wellen und Ventilbändern umfasst.

Alternativ kann die Stützvorrichtung in das Gehäuse der Heizungs- oder Klimaanlage integriert sein, wobei die Herstellung der Stützvorrichtung gleichzeitig mit der Herstellung des Gehäuses erfolgen oder die Stützvorrichtung nachträglich eingebaut werden kann.

Im folgenden wird die Erfindung anhand eines Ausführungsbeispiels unter Bezugnahme auf die Zeichnung im einzelnen erläutert. In der Zeichnung zeigen:

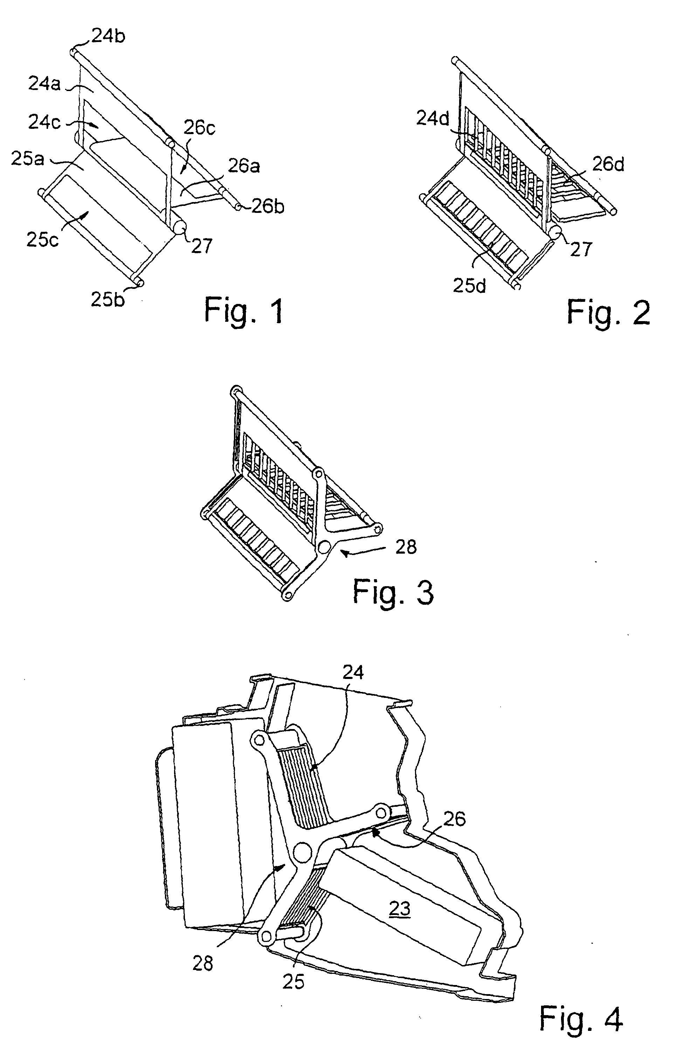

- Fig. 1: eine perspektivische Ansicht einer erfindungsgemäßen Wellenanordnung ohne Träger;
- Fig. 2: eine perspektivische Ansicht der erfindungsgemäßen Wellenanordnung von Fig. 1 mit teilweise dargestelltem Träger;
- Fig. 3: eine perspektivische Ansicht des Trägers von Fig. 1;
- Fig. 4: eine erste Anwendung der Wellenanordnung von Fig. 1;
- Fig. 5a bis c: eine schematische Darstellung der Funktionsweise der Wellenanordnung von Fig. 1;
- Fig. 6: eine schematische Darstellung der Funktionsweise gemäß einer alternativen Ausführungsform; und
- Fig. 7: eine schematische Darstellung einer Klimaanlage mit der Wellenanordnung von Fig. 1 sowie einer weiteren erfindungsgemäßen Wellenanordnung.

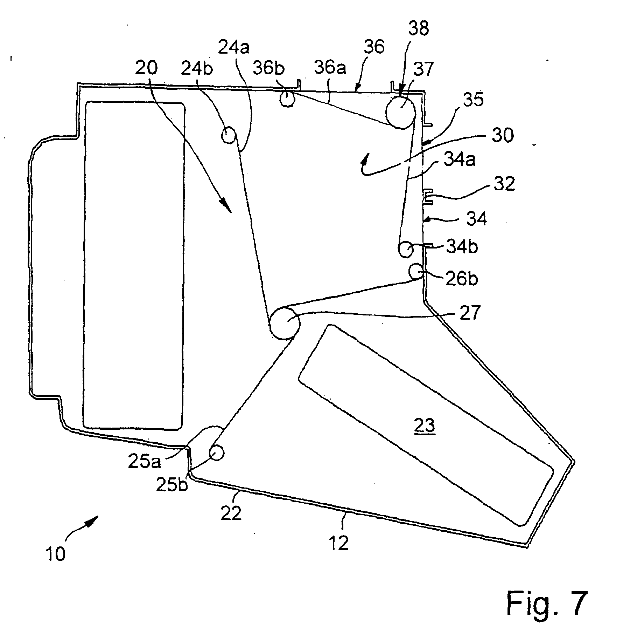

Eine erfindungsgemäße Klimaanlage 10 weist ein Luftführungsgehäuse 12 auf, in bzw. an dem verschiedene Komponenten der Klimaanlage 10 angeordnet sind, wobei die Klimaanlage 10 in an sich bekannter Weise aufgebaut ist. Die Klimaanlage 10 weist eine Luftmisch-Vorrichtung 20 zur Mischung der Luft in einem Lufttemperiergehäuse 22 und eine Luftverteiler-Vorrichtung 30 zur Verteilung der Luft in einem Luftverteilgehäuse 32 auf (vgl. Fig. 7), wobei das Lufttemperiergehäuse 22 und das Luftverteilgehäuse 32 Teile oder Teilbereiche des Luftführungsgehäuses 12 sind.

Die Zuführung der Luft in das Lufttemperiergehäuse 22 erfolgt ausgehend von einem Luftansaugtrakt über ein Gebläse und einem oder mehreren Filtem zur Reinigung der geförderten Luft. Im Lufttemperiergehäuse 22, in dem ein Heizkörper 23 zur Aufheizung der Luft angeordnet ist, erfolgt bei Bedarf mittels der Luftmisch-Vorrichtung 20 eine Mischung der Luft, so dass die gewünschte Luft-Temperatur eingestellt wird.

Die Luftmisch-Vorrichtung 20 weist hierfür drei Öffnungen 24, 25, 26 auf, die durch Ventilbänder 24a, 25a und 26a in Abhängigkeit der gewünschten Temperatur freigegeben bzw. verschlossen werden können. Die Ventilbänder 24a, 25a, 26a sind mit ihrem einen Ende an einer Zentral-Welle 27 und mit ihrem anderen Ende an Neben-Wellen 24b, 25b und 26b befestigt und - je nach Stellung der Wellen - teilweise aufgerollt. Die Ventilbänder 24a, 25a, 26a weisen ihrerseits Öffnungen 24c, 25c und 26c auf, welche je nach Stellung der Ventilbänder 24a, 25a, 26a mit den Öffnungen 24, 25 bzw. 26 zusammenwirken. Die Öffnungen 24c, 25c, 26c sind aus den jeweiligen Ventilbändern 24a, 25a, 26a ausgestanzt.

Die Zentral-Welle 27 und die Neben-Wellen 24b, 25b, 26b sind Teil einer Trägervorrichtung 28, welche ferner Folienstützen 24d, 25d und 26d aufweist. Die Trägervorrichtung 28 wird im wesentlichen durch zwei Rahmen gebildet, welche die Wellen 24b, 25b, 26b und 27 lagern. Die Folienstützen 24d, 25d, 26d stützen die Ventilbänder 24a, 25a, 26a, so dass diese die Öffnungen 24, 25, 26 bei einer entsprechenden Stellung des der jeweiligen Öffnung 24, 25, 26 zugeordneten Ventilbandes 24a, 25a, 26a bei Bedarf verschließen. Zur Steuerung der Ventilbänder 24a, 25a, 26a, d.h. der Positionierung der jeweiligen Öffnungen 24c, 25c, 26c in Bezug auf die Öffnungen 24, 25, 26, ist an der Zentral-Welle 27 ein Antrieb (nicht dargestellt) vorgesehen, welcher die Zentral-Welle 27 bei Bedarf entsprechend in die Richtung dreht, so dass die Ventilbänder 24a, 25a, 26a auf die Zentral-Welle 27 gewickelt werden. Gegen diesen Antrieb wirkt auf jede der Neben-Wellen 24b, 25b, 26b die Rückstellkraft einer Feder, bspw. einer Torsions- oder Spiralfeder, wodurch die Spannung der Ventilbänder 24a, 25a, 26a und bei Bedarf die Rückstellung, d.h. das Aufwickeln derselben auf die Neben-Wellen 24b, 25b, 26b, erfolgt. Als Antrieb ist ein Aktor, bspw. ein Schrittverstellmotor, vorgesehen.

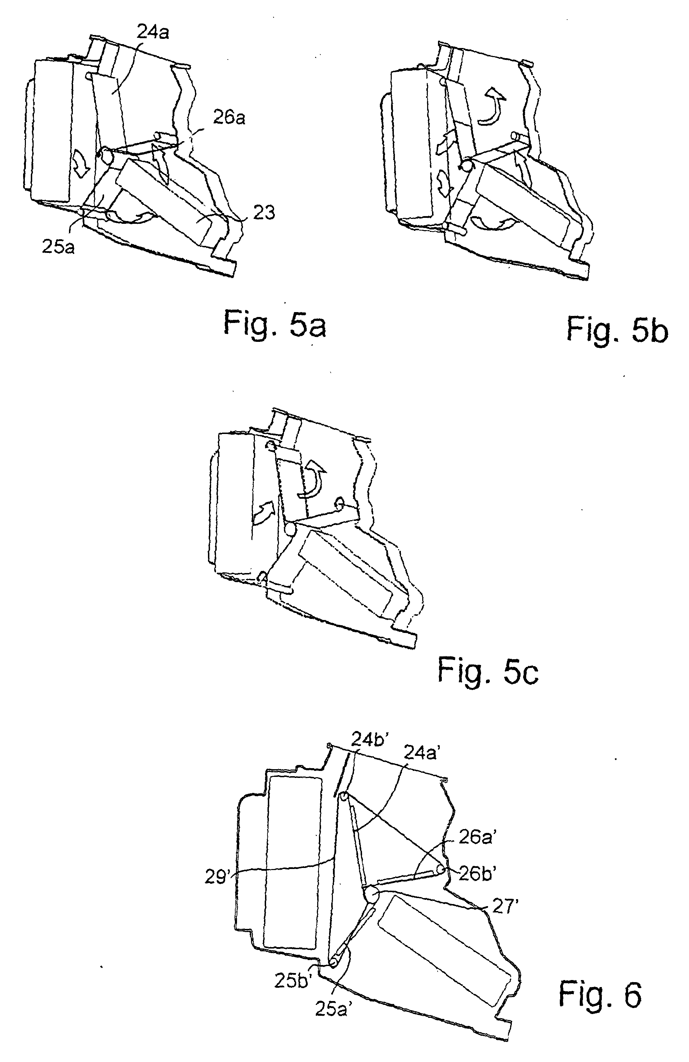

Im Heiz-Betrieb sind, wenn die Kaltluft-Öffnung 24c geschlossen ist, ist die Öffnung 25c vor der Heizung 23 und die Öffnung 26c nach der Heizung 23 geöffnet, so dass ein einziger Luftstrom durch die Öffnung 25c an der Heizung 23 vorbei durch die Öffnung 26c strömt (vgl. Fig. 5a). Hierbei ist gemäß dem vorliegenden Ausführungsbeispiel jeweils nur ein kleiner Teil der Ventilbänder 24a, 25a, 26a auf die Zentral-Welle 27 und ein großer Teil hiervon auf die Neben-Wellen 24b, 25b, 26b gewickelt.

Um vom Heizbetrieb in einen Mischbetrieb, wie er in Fig. 5b dargestellt ist, zu gelangen, wird die Zentral-Welle 27 vom Antrieb derart angetrieben, dass ein Teil der Ventilbänder 24a, 25a, 26a auf die Zentral-Welle 27 gewickelt wird, gegen die Rückstellkraft der Federn. In diesem Mischbetrieb strömt Luft in einem Luftstrom direkt durch die Kaltluft-Öffnung 24c und in einem zweiten Luftstrom durch die Öffnung 25c, an der Heizung 23 vorbei und durch die Öffnung 26c, wonach sich die beiden Luftströme wieder treffen und vermischen.

Wird die Zentral-Welle 27 weiter angetrieben, so wird der in Fig. 5c dargestellte Kaltluft-Betrieb erreicht, in dem ein Luftstrom direkt durch die Öffnung 24c strömt. Die Öffnungen 25c und 26c sind geschlossen, letztere um eine Restaufwärmung zu vermeiden. Die Rückstellung erfolgt mit Hilfe der Rücksteltkraft der Federn.

Gemäß einer in Fig. 6 dargestellten alternativen Ausführungsform des Antriebes der Wellen 24b', 25b', 26b' und 27' ist ein Ketten- oder Riemenantrieb in Form einer Perlenkette 29' vorgesehen, die mit allen Wellen 24b', 25b', 26b', 27' verbunden ist, so dass gleichzeitig sämtliche Wellen 24b', 25b', 26b', 27' gleichförmig und schlupffrei angetrieben werden und die Ventilbänder 24a', 25a' und 26a' synchron von den Neben-Wellen 24b', 25b', 26b' auf die Zentral-Welle oder zurück gewickelt werden. Auch in diesem Fall kann die Zentral-Welle 27' direkt angetrieben werden. Alternativ kann jede andere Welle oder aber die Perlenkette 29' von anderer Stelle aus angetrieben werden.

Bei beiden zuvor beschriebenen Ausführungsformen schließt sich an das Lufttemperiergehäuse 22 das besagte Luftverteilgehäuse 32 an, in dem die Luft auf die verschiedenen Luftauslässe oder Öffnungen 34, 35 und 36 verteilt wird. Die Öffnungen 34, 35, 36 können durch Ventilbänder 34a und 36a freigegeben bzw. verschlossen werden. Hierbei dient die Öffnung 34 der Luftzufuhr für den Fußraum im Fahrgastraum, die Öffnung 35 der Belüftung des Fahrgastraums und die Öffnung 36 der Entfrostung der Windschutzscheibe. Dabei werden die Luftströme durch die Öffnungen 34 und 35 durch das Ventilband 34a und der Luftstrom durch die Öffnung 36 durch das Ventilband 36a gesteuert.

Die Ventilbänder 34a und 36a sind - entsprechend den Ventilbändern 24a, 25a, 26a - mit ihrem einen Ende an einer Zentral-Welle 37 und mit ihrem anderen Ende an Neben-Wellen 34b, 36b befestigt und - je nach Stellung der Wellen - teilweise aufgerollt.

Entsprechend der zuvor geschilderten Trägervorrichtung 28 ist eine Trägervorrichtung 38 vorgesehen, welche die Zentral-Welle 37 und die Neben-Wellen 34b, 36b lagert. Folienstützen (nicht dargestellt) sind - im Gegensatz zu den Folienstützen 24d, 25d, 26d - direkt in das Luftverteilgehäuse 32 integriert. Die Steuerung der Öffnungen 34, 35, 36 erfolgt entsprechend der Öffnungen 24, 25, 26.

### Bezugszeichenliste

- 10: Klimaanlage
- 12: Luftführungsgehäuse
- 20: Luftmisch-Vorrichtung
- 22: Lufttemperiergehäuse
- 23: Heizkörper
- 24, 25, 26: Öffnung
- 24a, 25a, 26a, 24a', 25a', 26a': Ventilband
- 24b, 25b, 26b, 24b', 25b', 26b': Neben-Welle
- 24c, 25c, 26c: Öffnung
- 24d, 25d, 26d: Folienstütze
- 27,: 27' Zentral-Welle
- 28: Trägervorrichtung
- 29': Perlenkette
- 30: Luftverteiler-Vorrichtung
- 32: Luftverteilgehäuse
- 34,: 35, 36 Öffnung
- 34a,: 36a Ventilband
- 34b,: 36b Neben-Welle
- 37: Zentral-Welle
- 38: Trägervorrichtung

## Patentansprüche

1. Heizungs- oder Klimaanlage für ein Kraftfahrzeug mit einem Gehäuse, wobei im und/oder an dem Gehäuse (22; 32) mehrere Wellen (24b, 25b, 26b, 27; 34b, 36b, 37) für Ventilbänder (24a, 25a, 26a; 34a, 36a) vorgesehen sind, **dadurch gekennzeichnet, dass** auf einer Welle (27; 37) mehrere Ventilbänder (24a, 25a, 26a; 34a, 36a) angeordnet sind, die mit unterschiedlichen Wellen (24b, 25b, 26b; 34b, 36b) zusammenwirken.

2. Anlage nach Anspruch 1, **dadurch gekennzeichnet, dass** die Wellen (24b, 25b, 26b, 27; 34b, 36b, 37) parallel zueinander angeordnet sind.

3. Anlage nach Anspruch 1 oder 2, **dadurch gekennzeichnet, dass** die Wellen (24b, 25b, 26b; 34b, 36b) um eine zentrale Welle (27; 37) verteilt angeordnet sind, wobei die Ventilbänder (24a, 25a, 26a; 34a, 36a) eine sternförmige Anordnung aufweisen.

4. Anlage nach einem der vorhergehenden Ansprüche, **dadurch gekennzeichnet, dass** mindestens eine Welle zur Umlenkung eines Ventilbandes vorgesehen ist.

5. Anlage nach einem der vorhergehenden Ansprüche, **dadurch gekennzeichnet, dass** die Wellen (24b, 25b, 26b, 27; 34b, 36b, 37) an einer Trägervorrichtung (28; 38) gelagert sind.

6. Anlage nach einem der vorhergehenden Ansprüche, **dadurch gekennzeichnet, dass** die zentrale Welle (27; 37) angetrieben ist.

7. Anlage nach Anspruch 6, **dadurch gekennzeichnet, dass** die anderen Wellen (24b, 25b, 26b; 34b, 36b) eine Rückstellvorrichtung, insbesondere eine Feder, aufweist.

8. Anlage nach einem der Ansprüche 1 bis 5, **dadurch gekennzeichnet, dass** mindestens eine Welle (24b', 25b', 26b', 27') durch einen umlaufenden Antrieb (29') angetrieben ist.

9. Anlage nach einem der vorhergehenden Ansprüche, **dadurch gekennzeichnet, dass** eine Stützvorrichtung (24d, 25d, 26d) vorgesehen ist.

10. Anlage nach Anspruch 9, **dadurch gekennzeichnet, dass** die Stützvorrichtung (24d, 25d, 26d) in einem Modul integriert ist, welches auch die Trägervorrichtung (28) samt Wellen (24b, 25b, 26b, 27) und Ventilbändern (24a, 25a, 26a) umfasst.

11. Anlage nach Anspruch 9, **dadurch gekennzeichnet, dass** die Stützvorrichtung in das Gehäuse (32) der Heizungs- oder Klimaanlage (10) integriert ist.

## Claims

1. Heating or air conditioning system for a motor vehicle with a housing, wherein a plurality of shafts (24b, 25b, 26b, 27; 34b, 36b, 37) for valve tapes (24a, 25a, 26a; 34a, 36a) is provided in and/or on the housing (22; 32), **characterised in that** a plurality of valve tapes (24a, 25a, 26a; 34a, 36a) acting together with different shafts (24b, 25b, 26b; 34b, 36b) is located on one shaft (27: 37).

2. System according to claim 1, **characterised in that** the shafts (24b, 25b, 26b, 27; 34b, 36b, 37) are arranged parallel to one another.

3. System according to claim 1 or 2, **characterised in that** the shafts (24b, 25b, 26b; 34b, 36b) are distributed around a central shaft (27; 37), the valve tapes (24a, 25a, 26a; 34a, 36a) being arranged in a star formation.

4. System according to any of the preceding claims, **characterised in that** at least one shaft for deflecting a valve tape is provided

5. System according to any of the preceding claims, **characterised in that** the shafts (24b, 25b, 26b, 27; 34b, 36b, 37) are mounted on a carrier (28; 38).

6. System according to any of the preceding claims, **characterised in that** the central shaft (27; 37) is driven.

7. System according to claim 6, **characterised in that** the other shafts (24b, 25b, 26b; 34b, 36b) are provided with a return device, in particular a spring.

8. System according to any of claims 1 to 5, **characterised in that** at least one shaft (24b', 25b', 26b'; 27') is driven by a rotary drive (29').

9. System according to any of the preceding claims, **characterised in that** a support unit (24d, 25d, 26d) is provided.

10. System according to claim 9, **characterised in that** the support unit (24d, 25d, 26d) is integrated into a module including the carrier (28) complete with the shafts (26b, 25b, 26b, 27) and the valve tapes (24a, 25a, 26a).

11. System according to claim 9, **characterised in that** the support unit is integrated into the housing (32) of the heating or air conditioning system (10).

## Revendications

1. Installation de chauffage ou de climatisation pour un véhicule automobile, avec un boîtier, sachant que dans et/ou sur le boîtier (22; 32) sont prévus plusieurs arbres (24b, 25b, 26b, 27; 34b, 36b, 37) pour des bandes formant opercule (24a, 25a, 26a; 34a, 36a), **caractérisée en ce que** plusieurs bandes formant opercule (24a, 25a, 26a; 34a, 36a) sont disposées sur un arbre (27; 37) et coopèrent avec des arbres (24b, 25b, 26b; 34b, 36b) différents.

2. Installation selon la revendication 1, **caractérisée en ce que** les arbres (24b, 25b, 26b, 27; 34b, 36b, 37) sont disposés parallèlement les uns aux autres.

3. Installation selon la revendication 1 ou 2, **caractérisée en ce que** les arbres (24b, 25b, 26b; 34b, 36b) sont disposés de façon répartie autour d'un arbre central (27; 37), les bandes formant opercule (24a, 25a, 26a; 34a, 36a) présentant un agencement en étoile.

4. Installation selon l'une des revendications précédentes, **caractérisée en ce qu'**au moins un arbre est prévu pour assurer le renvoi d'une bande formant opercule.

5. Installation selon l'une des revendications précédentes, **caractérisée en ce que** les arbres (24b, 25b, 26b, 27; 34b, 36b, 37) sont montés à rotation sur un dispositif support (28; 38).

6. Installation selon l'une des revendications précédentes, **caractérisée en ce que** l'arbre central (27; 37) est entraîné.

7. Installation selon la revendication 6, **caractérisé en ce que** les autres arbres (24b, 25b, 26b; 34b, 36b) présentent un dispositif de rappel, en particulier un ressort.

8. Installation selon l'une des revendications 1 à 5, **caractérisée en ce qu'**au moins un arbre (24b', 25b', 26b', 27') est entraîné au moyen d'un entraînement circulatoire (29').

9. Installation selon l'une des revendications précédentes, **caractérisée en ce qu'**un dispositif d'appui (24d, 25d, 26d) est prévu.

10. Installation selon la revendication 9, **caractérisée en ce que** le dispositif d'appui (24d, 25d, 26d) est intégré dans un module, comprenant également le dispositif support (28) avec les arbres (24b, 25b, 26b, 27) et les bandes formant opercule (24a, 25a, 26a).

11. Installation selon la revendication 9, **caractérisée en ce que** le dispositif d'appui est intégré dans le boîtier (32) de l'installation de chauffage ou de climatisation (10).
